# EUROPÄISCHE PATENTANMELDUNG

(11) **EP 2 223 799 A1**
(43) Veröffentlichungstag der Anmeldung: **01.09.2010**
(21) Anmeldenummer: 10000582.6
(22) Anmeldetag: 21.01.2010
(51) Int. Cl.: B32B 21/02, B32B 21/13, D21J 1/00

(54) **Mehrlagige Leichtbauplatte**

(30) Priorität: 23.02.2009 DE 102009009981
(71) Anmelder: Homanit GmbH & Co. KG, 37412 Herzberg am Harz (DE)
(72) Erfinder: Homann, Fritz Hans, 81925 München (DE)
(74) Vertreter: Holland, Ralf

(57) **Zusammenfassung**

Bei einer mehrlagigen Leichtbauplatte 1 fassen eine obere und eine untere Decklage aus einer mitteldichten oder hochdichten Faserplatte 5,6 eine leichte Faserplatte 2 geringer Dichte verklebt ein.

## Beschreibung

Die Erfindung betrifft eine mehrlagige Leichtbauplatte.

Verbund- und Kompositwerkstoffe, basierend auf Holz oder Holzersatzstoffen, sind in vielfältigen Ausführungen bekannt und bewährt.

Die bekannten schichtverleimten Sperrholzplatten für sich oder die sogenannten Tischlerplatten mit einer von Sperrholzplatten eingefassten, stabverleimten Mittelschicht aus Holz sind aufgrund ihres hohen Flächengewichts für viele Anwendungen zu schwer und zu teuer.

So ersetzen im Möbel- und Innenausbau zunehmend Leichtbauplatten nicht nur die bekannten Verbund- und Kompositwerkstoffe, sondern auch MDF-Faserplatten und Spanplatten größerer Stärke. Diese Leichtbauplatten weisen zwischen zwei Decklagen, Faserplatten einer Stärke zwischen etwa 2,5 mm und 8 mm, eine Gewicht sparende Mittelschicht in Form von Waben oder Schäumen, Holzspan-Schaumkunststoffgemischen oder anderen, Hohlräume ausbildenden Strukturen auf. Die Schichtstärke der Mittelschicht ist dabei derart bemessen, dass die typischen, bspw. in der Möbelindustrie genutzten Plattenstärken zwischen ca. 15 mm und 60 mm nach wie vor zur Verfügung stehen.

Der Vorteil des geringen Gewichts durch die leichte Mittelschicht wird jedoch durch den Nachteil mehr als aufgewogen, dass ein Setzen von Beschlägen äußerst problematisch ist, da ein Verankern von bspw. Schrauben in der inhomogenen Mittelschicht nicht möglich ist und auch die geringe Materialstärke der Decklagen eine solide Befestigung allein nicht zulässt. So bedarf es spezieller und damit teuerer Dübeltechniken für das Festlegen von Beschlägen oder spezieller, bei der Fertigung der Leichtbauplatte einzubindenden Strukturen wie Stegen oder dergleichen für das Festlegen der Beschläge, womit dann eine derartige Leichtbauplatte nicht mehr freizügig verwendet werden kann.

Darüber hinaus besteht bei einer Befestigung allein an oder in einer Decklage die Gefahr, dass es zu einer Ablösung derselben von der Mittelschicht und damit zu einer Deformation kommt.

Vor diesem technischen Hintergrund macht die Erfindung es sich zur Aufgabe, eine Leichtbauplatte, wie der Name sagt, von geringem Gewicht, aber von hoher Festigkeit zu schaffen, an der Beschläge in an sich üblicher Weise und überall festgelegt werden können.

Gelöst wird diese technische Problematik durch eine mehrlagige Leichtbauplatte, bei der gemäß des Anspruchs 1 eine obere und eine untere Decklage aus einer mitteldichten oder hochdichten Faserplatte eine leichte Faserplatte geringer Dichte verklebt einfassen.

Es hat sich gezeigt, dass bei derartigen, mehrlagigen Leichtbauplatten die Befestigung von Beschlägen aufgrund der homogenen Mittelschicht überall möglich ist. So können auch herkömmliche Beschläge in den Elementen mit ausreichender Festigkeit, ohne dass es einer vorherigen Festlegung von aussteifenden Stegen oder dergleich bedarf, befestigt werden.

Da bei der Leichtbauplatte nach der Erfindung nur auf Holz zurückgegriffen wird, kann sie ferner wie eine reine Holzplatte auch bearbeitet werden. Neuerungen und/oder Ergänzungen an bestehenden Bearbeitungszentren der solche Platten verarbeitenden Industrie bedarf es nicht.

Infolge des homogenen Aufbaus kann die Bearbeitung der erfindungsgemäßen Leichtbauplatte mit hoher Maßgenauigkeit erfolgen und ist auch die Leichtbauplatte selbst von hoher Maßhaltigkeit.

Auch für den Endverbraucher ergeben sich Vorteile, wenn er auf Leichtbauplatten nach der Erfindung zurückgreift. Die bei einem Schließen einer Türe aus einer erfindungsgemäßen Leichtbauplatte, bei einem Anklopfen oder dergleichen erzeugten Geräusche entsprechen aufgrund der Homogenität der Platte weitgehend denen eines Vollholzes.

Insbesondere können jedoch auch Leichtbauplatten nach der Erfindung vollständig formaldehydfrei verklebt und/oder verleimt sein, so dass sie für einen Innenausbau, beispielsweise als Türe oder Möbelplatte problemlos herangezogen werden können.

Dabei ist insbesondere daran gedacht, dass die leichte Faserplatte geringer Dichte PMDI-verleimt ist. Polymeres Diphenylmethandiisocyanat ist ein Bindemittel, das frei von Formaldehyd ist. Darüber hinaus ist PMDI nur sehr schwer entflammbar. Wie die Faserplatte geringer Dichte können auch die die Decklagen ausbildenden mittel- oder hochdichten Faserplatten selbst auch frei von einem Formaldehydaustrag sein.

Neben den Flachseiten der leichten Faserplatte geringer Dichte können auch die Schmalseiten der mehrlagigen Leichtbauplatte mit einer Überdeckung versehen sein, durch die eine sauberen Kantengestaltung als auch eine Aussteifung der Platte erfolgen kann. Dabei kann weiter daran gedacht sein, dass die eine Schmalseite überdeckende Decklage eine in eine Nut in der Schmalseite eingebrachte Verstärkungsleiste zwischen den Decklagen der Flachseiten überdeckt.

In an sich üblicher Weise kann vorgesehen sein, dass eine Decklage mit einem Furnier oder einer Folie belegt ist. Alternativ kann eine Deckplatte auch beschichtet sein, beispielsweise mit einem Lack, einem Kunststoff oder einer mineralischen Auflage. Bei dieser Oberflächenveredelung zeigt sich ein weiterer Vorteil der Leichtbauplatte nach der Erfindung. Während bei herkömmliche Leichtbauplatten insbesondere mit dünnen Decklagen bspw. nach einem Schliff und einer Lackierung sich die Wabenstruktur oder dergleichen abzeichnen kann, ist dies Aufgrund der homogenen Struktur bei der erfindungsgemäßen Leichtbauplatte nicht möglich.

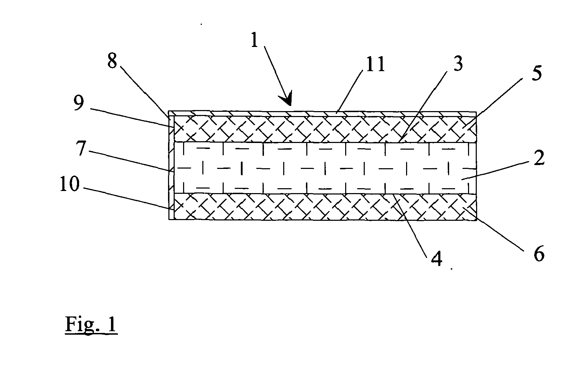

Die Erfindung wird anhand der Zeichnung näher erläutert, deren einzige Figur 1 einen idealisierten und nicht maßstabsgetreuen Schnitt durch eine Leichtbauplatte nach der Erfindung zeigt.

Bei der Leichtbauplatte 1 nach Erfindung wird eine mittlere Schicht durch eine Faserplatte 2 geringer Dichte ausgebildet, deren Fasern PMDI-verleimt sind. Damit kann es bei dieser Faserplatte 2 zu keinem Formaldehydaustrag kommen. Mit insbesondere ebenfalls formaldehydfreien Klebern sind die Flachseiten 3,4 mit mittel- oder hochdichten, bevorzugt formaldehydfreie Faserplatten 5,6 verleimt. Diese Verleimung erfolgt vorzugsweise vollflächig.

Wie die Flachseiten 3,4 der Faserplatte 2 geringer Dichte können auch Schmalseiten 7 mit einer Decklage 8 versehen sein, die auch die Schmalseiten 9,10 der Decklagen ausbildenden Faserplatten 5,6 überdeckt.

Auch wenn die eine Mittelschicht ausbildende Faserplatte 2 von lediglich geringer Dichte ist, sollte der Verbund der Fasern hart und steif ausgebildet sein. Es ist dann möglich, die Leichtbauplatte 1 nach der Erfindung auch in großen Dimensionen von mehr als sechs Meter Länge und zwei Meter Breite formstabil herzustellen.

In an sich üblicher Weise kann eine eine Decklage ausbildende Faserplatte 5 mit einem Furnier 11 oder einer Folie belegt sein, alternativ eine mineralische Beschichtung oder eine aus einem Kunststoff aufweisen, in Fig. 1 lediglich angedeutet.

**Bezugszeichenliste:**
- 1.: Leichtbauplatte
- 2.: Faserplatte
- 3.: Flachseite
- 4.: Flachseite
- 5.: Faserplatte
- 6.: Faserplatte
- 7.: Schmalseite
- 8.: Decklage
- 9.: Schmalseite
- 10.: Schmalseite
- 11.: Furnier

## Patentansprüche

1. Mehrlagige Leichtbauplatte, **dadurch gekennzeichnet, dass** eine obere und eine untere Decklage aus einer mitteldichten oder hochdichten Faserplatte (5,6) eine leichte Faserplatte (2) geringer Dichte verklebt einfassen.

2. Leichtbauplatte nach Anspruch 1, **dadurch gekennzeichnet, dass** Verklebungen und/oder Verleimungen formaldehydfrei ausgeführt sind.

3. Leichtbauplatte nach einem oder mehreren der vorangehenden Ansprüche, **dadurch gekennzeichnet, dass** die leichte Faserplatte (2) geringer Dichte PMDI-verleimt ist.

4. Leichtbauplatte nach einem oder mehreren der vorangehenden Ansprüche, **dadurch gekennzeichnet, dass** Schmalseiten (7,9,10) der Leichtbauplatte (1) mit einer Decklage (8) versehen sind.

5. Leichtbauplatte nach einem oder mehreren der vorangehenden Ansprüche, **dadurch gekennzeichnet, dass** die eine Schmalseite überdeckende Decklage eine in eine Nut in der Schmalseite eingebrachte Verstärkungsleiste zwischen den Decklagen der Flachseiten überdeckt.

6. Leichtbauplatte nach einem oder mehreren der vorangehenden Ansprüche, **dadurch gekennzeichnet, dass** eine Decklage (Faserplatte 5) mit einem Furnier (11) oder einer Folie belegt ist.

7. Leichtbauplatte nach einem oder mehreren der vorangehenden Ansprüche, **dadurch gekennzeichnet, dass** eine Deckplatte beschichtet ist.
